# EUROPEAN PATENT APPLICATION

(11) **EP 4 601 094 A1**
(43) Date of publication of application: **13.08.2025**
(21) Application number: 24874065.6
(22) Date of filing: 26.09.2024
(51) Int. Cl.: H01M 50/258

(54) **BATTERY OF VEHICLE**

(30) Priority: 06.10.2023 CN 202322678583 U; 20.09.2024 CN 202422311603 U
(71) Applicant: Guangzhou Tufa Network Technology Co., Ltd, Guangzhou, Guangdong 511442 (CN)
(72) Inventor: SHI, Yi, Guangzhou, Guangdong 511442 (CN); ZHANG, Shiyang, Guangzhou, Guangdong 511442 (CN)
(74) Representative: Fuchs Patentanwälte Partnerschaft mbB
(86) International application number: PCT/CN2024/121338
(87) International publication number: WO 2025/073247

(57) **Abstract**

The present disclosure provides a battery of a vehicle, including an interface part, a power part, and an operation part. The interface part includes a first interface surface and a second interface surface. The power part includes a battery body and is connected with the interface part. The operation part is connected with the power part. The interface part includes: a first battery interface adapted to a first peripheral interface, where the first battery interface is mounted on the first interface surface and electrically connected with the battery body; and a second battery interface adapted to a second peripheral interface, where the second battery interface is mounted on the second interface surface and electrically connected with the battery body. The first battery interface is coupled and electrically connected with the first peripheral interface in a battery compartment after the battery is inserted into the battery compartment.

## Description

### TECHNICAL FIELD

The present disclosure relates to the technical field of batteries, and in particular, to a battery of a vehicle.

### BACKGROUND

With the development of technology, various types of personal transportation vehicles have emerged in people's lives, bringing great convenience. The use of short-distance transportation vehicles, in particular, has been increasing, such as scooters, tricycles, and self-balanced vehicles. Many common personal transportation vehicles are often equipped with batteries to provide power or support additional features, such as timekeeping, step counting, heart rate monitoring, weather forecasting, and more.

Currently, there are two main types of batteries used in personal transportation vehicles. One type involves fixed batteries that are integrated directly into the vehicle. The other type uses a battery-swapping method, where the battery is detachable and installed on the vehicle's main body. However, in the battery-swapping method, a single battery model can only be compatible with one specific vehicle model, resulting in poor battery compatibility, low usage frequency, and high costs.

The content in the background section is solely based on the inventor's personal knowledge and does not imply that the aforementioned information had entered the public domain prior to the filing date of this disclosure. Nor does it imply that such information can be considered prior art for this disclosure.

### SUMMARY

In order to solve the above-mentioned problems, the present disclosure provides a battery of a two-joint structure, where two joints have the same function but different manners of connection to a vehicle and/or a charging device; and different joints can be used on different vehicle models such that the university of the battery is improved. For example, such a battery can be used on an electric scooter or on an electric bicycle. It can be used on a two-wheeler, a three-wheeler, or even a four-wheeler (such as cars). Thus, even if the vehicle model is updated, the battery can also be used. The service life of the battery is guaranteed. It is avoided that the battery cannot be used on a new vehicle model launched. In addition, a charging cabinet can also be provided for charging the battery.

The present disclosure provides a battery of a vehicle, including: an interface part, a power part, and an operation part. The interface part includes a first interface surface, a second interface surface, and at least one side face. The power part includes a battery body and is connected with the interface par. The operation part is connected with the power part, where the interface part includes: a first battery interface, adapted to a first peripheral interface, where the first battery interface is mounted on the first interface surface and electrically connected with the battery body, and a second battery interface, adapted to a second peripheral interface, where the second battery interface is mounted on the second interface surface and electrically connected with the battery body, where the vehicle includes a battery compartment, a deep end of the battery compartment includes a bottom surface, the first peripheral interface is fixed on the bottom surface, and a position of the first battery interface on the first interface surface corresponds to a position of the first peripheral interface on the bottom surface, such that the first battery interface is coupled and electrically connected with the first peripheral interface after the battery is inserted into the battery compartment.

According to some embodiments provided in the present disclosure, the battery further includes a control circuit; where the first battery interface and the second battery interface each include: at least one communication contact array, electrically connected with the control circuit; and at least one power contact array, electrically connected with positive and negative power output electrodes of the battery body.

According to some embodiments provided in the present disclosure, each contact array in the at least one communication contact array includes: a first contact, electrically connected with a Controller Area Network (CAN) communication H port of the control circuit; a second contact, electrically connected with a CAN communication L port of the control circuit; a third contact, electrically connected with a grounding authentication hardwire detection port of the control circuit; and a fourth contact, electrically connected with a charging wake-up port of the control circuit.

According to some embodiments provided in the present disclosure, the control circuit is configured to: when the battery is connected with the vehicle, detect a charging signal or detect Detection (DET) pull-down through the fourth contact; or when the battery is connected with the vehicle, output an output voltage of a preset voltage value through the fourth contact, and after a preset duration, reduce the output voltage to 0.

According to some embodiments provided in the present disclosure, the first battery interface includes: one power contact array, including two negative contacts and one positive contact, where the two negative contacts are electrically connected with the negative power output electrode of the battery body, and the positive contact is electrically connected with the positive power output electrode; and the positive contact is located between the two negative contacts; and two communication contact arrays, respectively distributed on two sides of the power contact array.

According to some embodiments provided in the present disclosure, the first battery interface includes a base, and the base includes: a contact region, where each contact in the communication contact arrays and the power contact array is disposed on the contact region and is a protruding conductor having a first height; and a first protective wall, surrounding the contact region and having a second height greater than the first height, to provide protection for the power contact array and the communication contact arrays from a side face and a front face of the contact region.

According to some embodiments provided in the present disclosure, the battery further includes: a guide device, configured to guide the first battery interface when the battery enters the battery compartment and the first battery interface is coupled with the first peripheral interface.

According to some embodiments provided in the present disclosure, the second battery interface includes: one power contact array; and one communication contact array, disposed on one side of the power contact array.

According to some embodiments provided in the present disclosure, the interface part further includes: at least one side face. The at least one side face includes a first side face and a second side face, where the first side face intersects the second side face; and a recessed space, located at an intersection of the first side face and the second side face and including the second interface surface, and configured to accommodate the second peripheral interface.

According to some embodiments provided in the present disclosure, the recessed space includes: a first opening, formed on the first side face and opposite to the second interface surface, such that the second peripheral interface enters the recessed space from the first opening and is coupled with the second battery interface; a second opening, formed on the second side face, and configured for a wire of the second peripheral interface to enter the recessed space; and a second protective wall, configured to protect the second battery interface.

According to some embodiments provided in the present disclosure, the interface part further includes a second battery interface cover, movably connected with the second interface surface or the second protective wall, and configured to cover the first opening and the second opening when closed.

According to some embodiments provided in the present disclosure, the interface part is located at a first end of the power part; and the operation part is located at a second end of the power part, and includes: a handle, mechanically connected with the power part such that a user lifts the battery using a hand, a switch button, electrically connected with the control circuit, and configured to control the battery to be switched on and off; and an indicator lamp, electrically connected with the control circuit, and configured to display a state of the battery.

According to some embodiments provided in the present disclosure, the state of the battery includes: at least one of a battery power state, a battery operating state, a battery charging state, or a battery discharging state; and the handle is at least one of a C-shaped handle, an L-shaped handle, or a recessed handle.

According to some embodiments provided in the present disclosure, the power part is of a cuboid structure; and the interface part, the power part, and the operation part are independent units and are assembled into the battery.

Other functions of the battery presented in this specification will be enumerated in part in the following description. Creative aspects of the battery presented in this specification may be fully explained by practice or by using the methods, devices, and combinations described in the following detailed examples.

List of Reference Numerals: battery compartment-1000; transportation vehicle-001; charging device-002; battery-2000; main compartment body-110; compartment body cover-130; bottom surface-111; four sidewalls-113; accommodating compartment-150; first peripheral interface-115; second peripheral interface-117; interface part-210; power part-230; operation part-250; first end-235; second end-237; first housing-231; battery body-233; second housing-211; first battery interface-213; second battery interface-215; first interface surface-217; second interface surface-218; recessed space-219; base-2131; contact region-2131-1; first protective wall-2131-3; first negative contact-2133-1; positive contact-2133-3; first contact-2135-1; second contact-2135-3; third contact-2135-5; fourth contact-2135-7; second battery interface-215; second interface surface-218; at least one side face-216; recessed space-219; first side face-2161; second side face-2163; first opening-2191; second opening-2193; second protective wall-2195; second negative contact-2151-1; second positive contact-2151-3; fifth contact-2153-1; sixth contact-2153-3; seventh contact-2153-5; eighth contact-2153-7; guide device-270; second battery interface cover-220; third housing-251; handle-253; switch button-255; and indicator lamp-257.

### BRIEF DESCRIPTION OF THE DRAWINGS

To describe the technical solutions in the embodiments of the present application more clearly, the accompanying drawings required for describing the embodiments are briefly described below. Apparently, the accompanying drawings in the following description show merely some embodiments of the present application, and a person of ordinary skill in the art may derive other drawings from these accompanying drawings without creative efforts.
FIG. 1 is an assembly diagram of a battery compartment with a transportation vehicle and a charging device provided according to some exemplary embodiments of the present disclosure;
FIG. 2 is a mounting diagram of a battery compartment with a battery provided according to some exemplary embodiments of the present disclosure;
FIG. 3 is a structural schematic diagram of a battery presented in this specification in a first perspective;
FIG. 4 is a structural schematic diagram of a power part of a battery provided according to some embodiments in this specification;
FIG. 5 is a structural schematic diagram of an interface part of the battery of FIG. 3 according to this specification;
FIG. 6 is a structural schematic diagram of a second battery interface provided according to some embodiments of this specification; and
FIG 7 is a structural schematic diagram of an operation part of a battery presented in this specification in a second perspective.

### DETAILED DESCRIPTION

The following description provides specific application scenarios and requirements of this specification, with the purpose of enabling those skilled in the art to make and use the content in this specification. For those skilled in the art, various partial modifications to the disclosed embodiments are obvious, and without departing from the spirit and scope of this specification, the general principles defined herein can be applied to other embodiments and application. Therefore, the specification is not limited to the embodiments, but is the consistent with the widest scope of claims.

The terms used herein are merely intended to describe specific examples or embodiments, rather than to limit the present disclosure. For example, unless expressly stated otherwise, the singular forms "a", "an" and "this" used herein may also include plural forms. When used in this specification, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In the present disclosure, "X includes at least one of A, B, or C" means X includes at least A, X includes at least B, or X includes at least C. In other words, X may include only any combination of A, B, and C, or include any combination of A, B, and C and other possible content/element. The any combination of A, B, and C may be A, B, C, AB, AC, BC, or ABC.

In the present disclosure, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. For another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

In consideration of the following description, in this specification, these and other features, the operations and functions of related elements of the structure, as well as the economical efficiency of the combination and manufacturing of components can be significantly improved. With reference to the drawings, all of these form part of this specification. However, it should be clearly understood that the drawings are merely intended for illustration and description purposes, rather than to limit the scope of this specification. It should be understood that the accompanying drawings are not drawn to scale.

In a transportation vehicle with a replaceable battery, whether the battery is assembled with the transportation vehicle and/or a charging device depends on whether a battery interface is adapted to the transportation vehicle and/or the charging device. In the prior art, a battery is usually provided with one battery interface, which makes the universality of the battery poor, and the battery can only be connected with a single transportation vehicle and/or a charging device adapted to the battery interface and cannot be connected with other transportation vehicles and/or charging devices not adapted to this battery interface, and cannot meet recharging requirements in different scenarios.

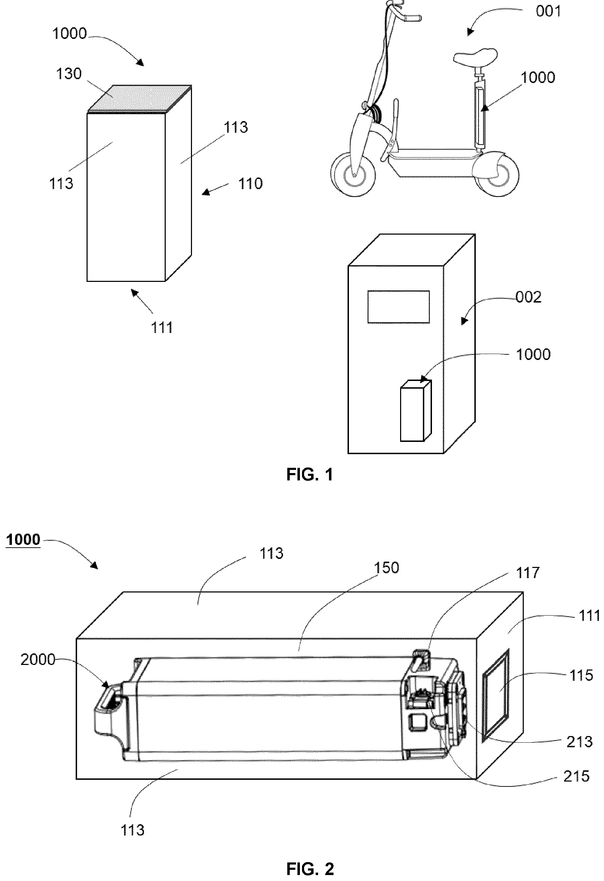

FIG. 1 is an assembly diagram of a battery compartment 1000 with a transportation vehicle 001 and a charging device 002 provided according to some exemplary embodiments of the present disclosure. As shown in FIG. 1, some embodiments of the present disclosure provide a battery 2000 of a vehicle. The battery 2000 can be adapted to transportation vehicles 001 and/or charging devices 002 of different types.

The transportation vehicle 001 may be various vehicles for short-distance traveling, commuting, leisure and entertainment, or the like. For example, the transportation vehicle 001 may be an electric bicycle which is combined with the traditional riding manner of a bicycle and an electrical auxiliary system such that a rider can drive the transportation vehicle by manual pedaling or by means of a battery. For example, the transportation vehicle 001 may be an electric scooter which is powered by electricity, and electric scooters of some models may also be folded for carrying. For example, the transportation vehicle 001 may be an electric balance car which is provided with two parallel wheels and powered by a battery, and a balance control system is built in the electric balance car such that a rider rides it by standing thereon. For another example, the transportation vehicle 001 may be an electric four-wheeled transportation vehicle which has a stable four-wheeled structure and is powered by a battery so that a user can steadily drive the vehicle by sitting on a seat. It needs to be noted that those skilled in the art will understand that other transportation vehicles 001 also fall into the protection scope of this specification.

The charging device 002 may be any device capable of supplementing electric energy for the battery. For example, the charging device 002 may be a movable charger which can be carried on a vehicle to supplement electric energy for the battery at any time. For example, the charging device 002 may be a fixed charging device mounted in a charging region, and the battery can be supplemented with electric energy in the charging region after being removed from the transportation vehicle 001. This specification does not impose a limitation on the type of the charging device 002.

The transportation vehicle 001 and/or the charging device 002 may include a battery compartment 1000. The battery compartment 1000 may be a mounting base for the battery 2000. The battery compartment 1000 may be of an internally hollow thin-wall housing structure. The battery 2000 may be mounted inside the battery compartment 1000. The battery compartment 1000 may be any shape according with human body engineering, such as a cuboid, a cube, a cylinder, or a combination thereof. The following description is made by taking as an example that the battery compartment 1000 is cuboid. The battery compartment 1000 may be made of any material, such as an aluminum alloy, a magnesium alloy, stainless steel, and a carbon fiber composite. This specification does not impose limitations on the shape and the material of the battery compartment 1000.

FIG. 2 is a mounting diagram of a battery compartment 1000 with a battery 2000 provided according to some exemplary embodiments of the present disclosure. As shown in FIG. 1 and FIG. 2, in some embodiments, the battery compartment 1000 may include a main compartment body 110 and a compartment body cover 130. The main compartment body 110 and the compartment body cover 130 are thin-walled parts. The main compartment body 110 and the compartment body cover 130 are mounted together to form an internally hollow housing structure, and an accommodating compartment 150 is formed inside the housing structure. The accommodating compartment 150 may accommodate the battery 2000 to play protection and dust prevention roles for the battery 2000. The main compartment body 110 and the compartment body cover 130 may be detachably connected to facilitate the replacement of the battery 2000. The detachable connection may be snap-fit connection, hinged connection, etc. This specification does not impose a limitation on it. In some embodiments, the battery compartment 1000 may also be formed by mounting more than two housings together, which will not be described redundantly in this specification.

When the battery compartment 1000 is cuboid, the main compartment body 110 includes a bottom surface 111 and four sidewalls 113. The bottom surface 111 and the four sidewalls 113 are located on a side of the main compartment body 110 close to the accommodating compartment 150. The bottom surfaces 111 are disposed oppositely and intersect the sidewalls 113 and the compartment body cover 130, respectively. At least one peripheral interface is fixedly disposed on the main compartment body 110. In particular, the peripheral interface is fixedly disposed on the bottom surface 111 and/or the sidewall 113. The peripheral interface may be disposed in a plurality of ways. For example, the peripheral interface may be disposed on the bottom surface 111; the peripheral interface may also be disposed on the sidewall 113; or, when the main compartment body includes a plurality of peripheral interfaces, the plurality of peripheral interfaces may also be disposed on the bottom surface 111 and the sidewall 113, respectively. Each peripheral interface may be adapted to the battery 2000. These peripheral interfaces have same functions and all can perform electric energy transmission and data communication. The number of the at least one peripheral interface may be any number, such as 1, 2, 3, or 4. Those skilled in the art will understand that the locations of other peripheral interfaces also fall into the protection scope of this specification.

In some embodiments, the battery compartment 1000 includes a first peripheral interface 115. In this case, after the battery 2000 is inserted into the battery compartment 1000, the first peripheral interface 115 is coupled with the battery 2000 to complete the transmission of electric energy. In some embodiments, the battery compartment 1000 includes a second peripheral interface 117. In this case, after the battery 2000 is inserted into the battery compartment 1000, the second peripheral interface 117 is coupled with the battery 2000 to complete the transmission of electric energy. Thus, the battery 2000 can be adaptively connected with a plurality of types of electric scooters or charging devices having different interfaces.

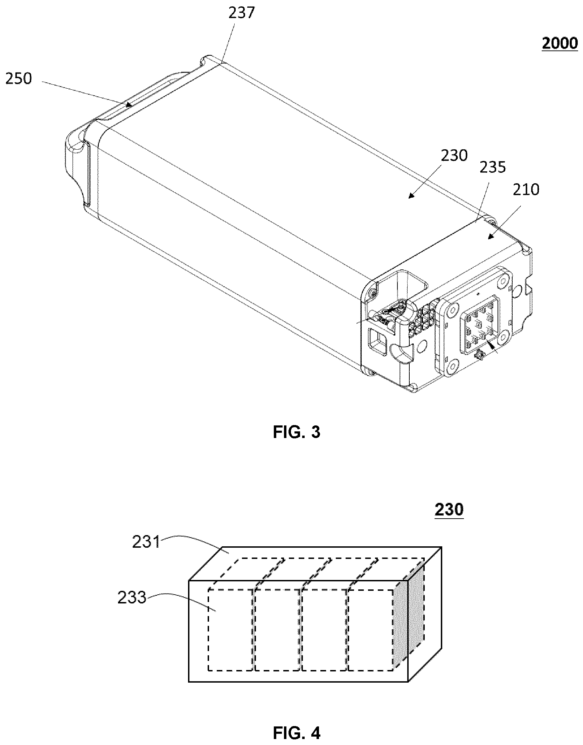

FIG. 3 is a structural schematic diagram of a battery 2000 of a vehicle presented in this specification in a first perspective. As shown in FIG. 3, this specification presents a battery 2000 of a vehicle. The battery 2000 is a major power source for a transportation vehicle 001 and can store electric energy and convert it into mechanical energy when the vehicle is running, thus driving the transportation vehicle 001 to move. The battery 2000 can be mounted on the transportation vehicle 001 and/or a charging device 002. In particular, the battery 2000 can be adapted to the above-mentioned accommodating compartment 150. When the battery 2000 is mounted on the transportation vehicle 001 and/or the charging device 002, the battery 2000 is mounted in the accommodating compartment 150 of the above-mentioned battery compartment 1000. The adaptation may be adaptation in shape and size. The type of the battery 2000 may be at least one of a lead acid battery, a lithium ion battery, a lithium iron phosphate battery, or a nickel-metal hydride battery.

In FIG. 3, the battery 2000 includes an interface part 210, a power part 230, an operation part 250, and a control circuit (not shown). The power part 230 is configured to store energy through a chemical reaction and convert chemical energy into electric energy during an operational process of the battery 2000. The interface part 210 can transmit the electric energy of the power part 230 to other electric parts of the transportation vehicle 001 or is connected with the charging device 002 to supplement electric energy. The operation part 250 can display a state of the battery 2000, and can control the battery 2000 to be switched on and off. The user experience is enhanced. The control circuit can receive a control command from the operation part 250, and can transmit state information of the battery 2000 to the operation part 250. The normal operation of the battery 2000 is realized by means of interworking of the interface part 210, the power part 230, the operation part 250, and the control circuit.

Further, the power part 230 is eclectically connected with the control circuit first, and then the control circuit is electrically connected with the operation part 250 and the interface part 210 and the interface part 210 is then electrically connected with the transportation vehicle 001 and/or the charging device 002 so as to monitor the state of the battery 2000, control the battery 2000 to be switched on and off, and transmit data to between the battery 2000 and the transportation vehicle 001 and/or the charging device 002. On the one hand, the control circuit can monitor the state of the power part 230 in real time and output an appropriate control signal to the operation part 250 according to monitoring data, and the operation part 250 receives and displays the control signal. On the one hand, the operation part 250 can enable a circuit between the control circuit and the interface part 210 to be closed or opened so as to control a current to from the power part 230 to other electric components or prohibit the current from flowing from the power part 230 to other electric components. On the other hand, the power part 230 can transfer electric energy to and perform communication transmission with the transportation vehicle 001 and/or the charging device 002 through the control circuit and the interface part 210.

The control circuit can be mounted inside the battery 2000, e.g., inside the interface part 210, or inside the operation part 250. The control circuit includes a plurality of ports, and the control circuit can be connected with the power part 230, the operation part 250, and the interface part 210 through the plurality of ports. The plurality of ports may include a battery connection port, a communication port, a switch control port, an indicator lamp port, etc. As described above, the electric connection between the power part 230, the control circuit, the operation part 250, and the interface part 210 can be realized through the above-mentioned plurality of ports.

In particular, the control circuit can be electrically connected with the power part 230 through the battery connection port. The battery connection port may include a positive connection end and a negative connection end. The positive connection end of the battery connection port is connected with a positive power output electrode of the power part 230 and the negative connection end is connected with a negative power output electrode of the power part 230, thereby realizing the monitoring of the state of the power part 230. In particular, the control circuit can monitor a plurality of state parameters (such as a battery voltage, an electric quantity state, a charge state, and a discharge state) of the power part 230 by means of the positive connection end and the negative connection end. Those skilled in the art will understand that the monitoring of other state parameters also falls into the protection scope of this specification.

The control circuit can be electrically connected with the operation part 250 through the indicator lamp port or the switch control port. In particular, the indicator lamp port is electrically connected with a display component of the operation part 250 to display the state of the battery 2000. The indicator lamp port can transmit the state parameters of the power part 230 monitored by the control circuit to the display component of the operation part 250. The switch control port is electrically connected with a switch control component of the operation part 250 to control the battery 2000 to be switched on and off.

The control circuit can be electrically connected with the interface part 210 through a communication port, a grounding authentication hardwire detection port, or a charging wake-up port. The communication port can be electrically connected with the interface part 210 so that the power part 230 can exchange data with the transportation vehicle 001 and/or the charging device 002 through the interface part 210. In particular, the control circuit can exchange data with and transfer control instructions to the transportation vehicle 001 and/or the charging device 002 using a plurality of communication ports. The plurality of communication ports may be one of a Controller Area Network (CAN) communication port, an Inter-Integrated Circuit (I²C) communication port, a Serial Peripheral Interface (SPI) communication port, a Universal Asynchronous Receiver-Transmitter (UART) communication port, or a Local Interconnect Network (LIN) communication port.

The grounding authentication hardwire detection port may be electrically connected with the interface part 210. On the one hand, when the battery 2000 is connected with the transportation vehicle 001 and/or the charging device 002, the grounding authentication hardwire detection port can provide a specific security authentication mechanism. In this mechanism, the grounding authentication hardwire detection port of the control circuit can be configured to check identity authentication between the battery 2000 and the transportation vehicle 001 and/or the charging device 002. Only the transportation vehicle 001 and/or the charging device 002 passing the authentication can be connected with the battery 2000 to perform data interaction with the battery 2000. On the other hand, the grounding authentication hardwire detection port can be configured to detect whether the battery 2000 is grounded well to ensure electric safety. When grounding is bad or disconnected, the control circuit can rapidly detect this condition and take a corresponding protective measure, such as stopping charging or discharging operation to avoid potential safety hazards.

The charging wake-up port may be electrically connected with the interface part 210. In some specific scenarios, the control circuit can control the battery 2000 to execute a wake-up program through the charging wake-up port. For example, in the battery 2000 which is not used for a long time, the control circuit can perform charging wake-up regularly through the charging wake-up port to maintain the activity of the battery 2000. For example, when the battery 2000 is connected with the transportation vehicle 001 and/or the charging device 002, the transportation vehicle 001 and/or the charging device 002 will send a charging signal through the charging wake-up port, and the control circuit will detect the charging signal and start a charging program. For example, when the battery 2000 is connected with the transportation vehicle 001 and/or the charging device 002, the control circuit detects that the state of the battery 2000 changes and uses Detection (DET) pull-down as a notification signal of the state changing; at this point, the battery 2000 executes the charging wake-up program. For another example, when the battery 2000 is connected with the transportation vehicle 001, the battery 2000 outputs an output voltage of a preset voltage value through the control circuit, and after a preset duration, the control circuit reduces the output voltage to 0, thus enabling active wake-up charging. Those skilled in the art will understand that other charging wake-up scenarios also fall into the protection scope of this specification.

The interface part 210, the power part 230, and the operation part 250 connected with the control circuit can be molded integrally, or separately molded as independent units and then assembled together to form the battery 2000. When the interface part 210, the power part 230, and the operation part 250 are separately molded as independent units and then assembled together form the battery 2000, the power part 230 serves as a mounting base for other components. In particular, the power part 230 includes a first end 235 and a second end 237. The interface part 210 is mounted at the first end 235 of the power part 230. The mounting manner may be a fixed connection, or may be a detachable connection. The operation part 250 is mounted at the second end 237 of the power part 230. The mounting manner may be a fixed connection, or may be a detachable connection. Further, the fixed connection may be threaded connection, welding, riveting, adhesive bonding, snap-fit connection, tenon-and-mortise connection, etc. The detachable connection may be snap-fit connection, hinged connection, key connection, etc. This specification does not impose a limitation on it.

FIG. 4 is a structural schematic diagram of a power part 230 of a battery 2000 provided according to some embodiments in this specification. As shown in FIG. 4, the power part 230 can be a major energy storage component of the battery 2000. The power part 230 may include a first housing 231 and a battery body 233. The first housing 231 may be a mounting base for the battery body 233 to support the battery body 233. The battery body 233 is fixedly mounted at least in part inside the first housing 231. The first housing 231 may be adapted to the above-mentioned battery compartment 1000. The adaptation may be adaptation in shape and size. The material of the first housing 231 may be stainless steel, aluminum, rigid plastics, etc. This specification does not impose limitations on the shape and the material of the first housing 231.

The battery body 233 includes at least one battery cell. The at least one may be 1, 2, 3, 4, 6, etc., which will not defined here. When there are a plurality of battery cells, in some embodiments, the plurality of battery cells are connected in series through internal conductors to form the battery body 233. For example, a target voltage of the battery body 233 is 48 V and the current is 40 A, and 4 battery cells having the voltage of 12 V and the current of 40 A can be selected to be connected in series. In some embodiments, the plurality of battery cells are connected in parallel through internal conductors to form the battery body 233. For example, a target voltage of the battery body 233 is 48 V and the current is 40 A, and 4 battery cells having the voltage of 48 V and the current of 10 A can be selected to be connected in parallel. The positive and negative power output electrodes of the battery are located on the first housing 231 and on a side facing the interface part 210.

The interface part 210 is an electric energy output port of the power part 230, and the electric energy and the state of the power part 230 can be output through the interface part 210. In particular, at least a portion of the interface part 210 is electrically connected with the battery body 233 of the power part 230, and at least a portion of the interface part 210 is electrically connected with the control circuit. When the battery 2000 is connected with the transportation vehicle 001 and/or the charging device 002, the battery body 233 and the control circuit are electrically connected with the battery compartment 1000 of the transportation vehicle 001 and/or the charging device 002 through the interface part 210 to exchange data and transmit instructions.

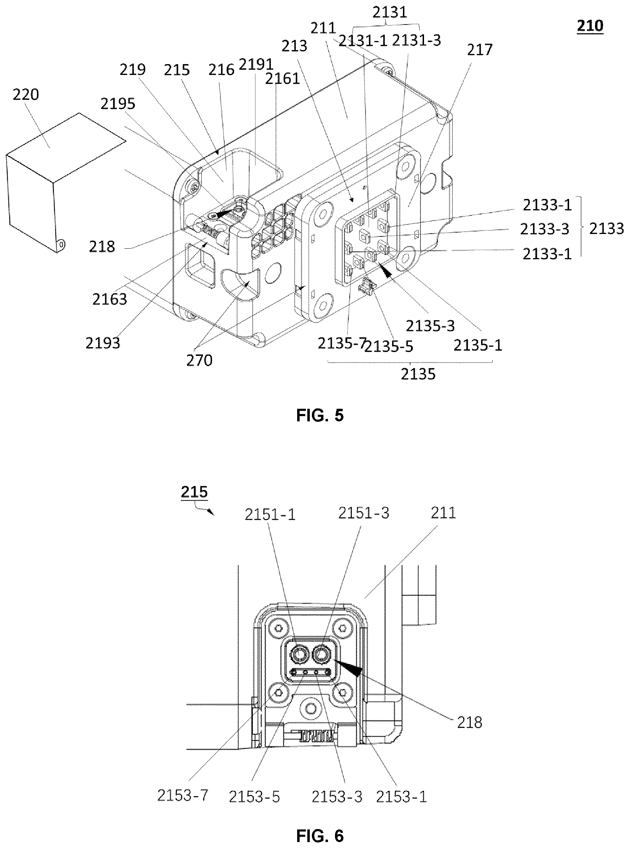

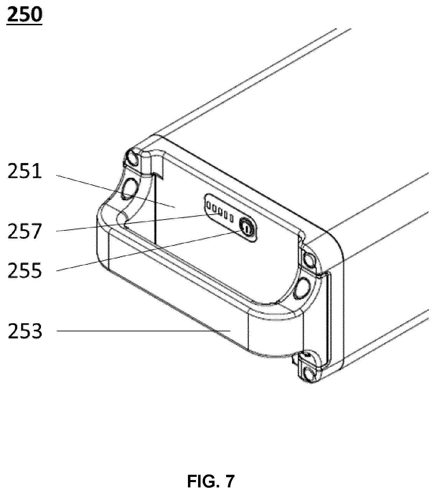

FIG. 5 is a structural schematic diagram of an interface part 210 of the battery 2000 of FIG. 3 according to this specification; FIG. 6 is a right view of a battery 2000 provided according to some embodiments of this specification; and FIG 7 is a top view of a battery 2000 provided according to some embodiments of this specification. As shown in FIGs. 5-7, the interface part 210 includes a second housing 211, a first battery interface 213, a second battery interface 215, a first interface surface 217, a second interface surface 218, and a recessed space 219. The second housing 211 may be a mounting base for the interface part 210 to play a support role. The other portions of the interface part 210 can be mounted with the second housing 211 as a carrier. For example, the first battery interface 213, the second battery interface 215, the first interface surface 217, the second interface surface 218, and the recessed space 219 can be disposed on the second housing 211. The second housing 211 can be molded integrally with the above-mentioned first housing 231, or may be molded separately from and then assembled with the first housing 231. When the second housing 211 and the first housing 231 are molded separately and then assembled, the second housing 211 can be connected with the first housing 231. In particular, the second housing 211 can be fixedly connected or detachably connected with the first housing 231. The fixed connection and the detachable connection may be the same as described above in this specification, which will not be described redundantly here. The material of the second housing 211 may be stainless steel, aluminum, rigid plastics, etc. This specification does not impose limitations on the shape and the material of the second housing 211.

The first interface surface 217 is disposed on the second housing 211 and located on an end face of the interface part 210 away from the power part 230. When the battery 2000 is mounted within the battery compartment 1000, the position of the first interface surface 217 corresponds to the position of the bottom surface 111 of the battery compartment 1000. The first battery interface 213 is mounted on the first interface surface 217 and adapted to the first peripheral interface 115. When the battery 2000 is inserted into the battery compartment 1000, the first battery interface 213 disposed on the first interface surface 217 is coupled and electrically connected with the first peripheral interface 115 disposed on the bottom surface 111 of the battery compartment 1000. The adaptation may be adaptation in shape and size.

The first battery interface 213 includes a base 2131. The base 2131 provides a mounting carrier for other portions of the first battery interface 213. The base 2131 includes a contact region 2131-1 and a first protective wall 2131-3. The first protective wall 2131-3 is adapted to the contact region 2131-1 and disposed around the contact region 2131-1. The adaptation may be adaptation in shape and size. A plurality of contacts are distributed on the contact region 2131-1. The plurality of contacts are protruding conductors having a first height. The first protective wall 2131-3 has a second height. The second height is greater than the first height such that a side face and a front face of the contact region 2131-1 provide protection for the plurality of contacts within the contact region 2131-1. The material of the plurality of contacts may be a metal alloy, e.g., a material having good electrical conductivity such as a copper alloy. This specification does not impose a limitation on the material of the contact.

The presence of the plurality of contacts can enable a circuit of the battery 2000 with the transportation vehicle 001 and/or the charging device 002 to be closed. The plurality of contacts include at least one communication contact array and at least one power contact array. The at least one communication contact array can realize communication of the battery 2000 with the transportation vehicle 001 and/or a third-party communication device. The at least one power contact array can realize electric energy output from the battery 2000 and electric energy input to the charging device 002. It needs to be noted that the at least one communication contact array may include one communication contact array, two communication contact arrays, three communication contact arrays, etc. The at least one power contact array may include one power contact array, two power contact arrays, three power contact arrays, etc.

For ease of showing, the following description is made by taking as an example that the first battery interface 213 includes one power contact array and two communication contact arrays. In this case, the two communication contact arrays are distributed on two sides of the one power contact array. Those skilled in the art will understand that other numbers of power contact arrays and communication contact arrays also fall into the protection scope of this specification.

The power contact array is electrically connected with the battery body 233 and includes two first negative contacts 2133-1 and one first positive contact 2133-3. The two first negative contacts 2133-1 are electrically connected with the negative power output electrode of the battery body 233, and the first positive contact 2133-3 is electrically connected with the positive power output electrode. The first positive contact 2133-3 is located between the two first negative contacts 2133-1. When the battery 2000 is connected with the transportation vehicle 001 and/or the charging device 002, any one of the two first negative contacts 2133-1 is communicated with the battery body 233 and realizes circuit closing together with the first positive contact 2133-3, and the other first negative contact 2133-1 serves as a standby connection, thereby preventing poor contact or damage of the first negative contacts 2133-1 and improving the reliability of connection.

The at least one communication contact array is electrically connected with the control circuit. In particular, as described above, taking two communication contact arrays as an example, the two communication contact arrays are distributed on both sides of one power contact array. When the battery 2000 is connected with the transportation vehicle 001 and/or the charging device 002, the manner of using the two communication contact arrays may be different in different scenarios. For example, one of the two communication contact arrays is used for communication transmission, and the other one is used as a standby design. When one communication contact array is out of order, the other communication contact array can still continue to transmit data, maintaining the stability of data transmission. For another example, when the battery 2000 needs to process a mass of data, the two communication contact arrays can share the load and are responsible for different data flows, respectively. This can avoid that the data processed by a single communication contact array is saturated to affect the data transmission efficiency and the response speed. For another example, when the transportation vehicle 001 and/or the charging device 002 is upgraded or added with a function, one of the two communication contact arrays can be assigned with a new communication task or support a new communication protocol as needed. When the number of communication contact arrays is other numbers, the functions and use scenarios of a plurality of communication contact arrays are also as described above, which will not be described redundantly here.

Each of the two communication contact arrays includes four contacts. The four contacts can perform data transmission, safety protection, and charging wake-up, respectively. In particular, the four contacts include a first contact 2135-1, a second contact 2135-3, a third contact 2135-5, and a fourth contact 2135-7. The first contact 2135-1 and the second contact 2135-3 are electrically connected with the CAN communication port of the control circuit. In particular, the first contact 2135-1 is electrically connected with the CAN communication H port of the control circuit, and the second contact 2135-3 is electrically connected with the CAN communication L port of the control circuit. The battery 2000 is in communication connection with the transportation vehicle 001 and/or the charging device 002 through the first contact 2135-1 and the second contact 2135-3. Each node on a CAN bus interprets data and performs communication by detecting a voltage difference between the CAN communication H port and the CAN communication L port. The first contact 2135-1 and the second contact 2135-3 can feed the state information of the battery 2000 monitored by the control circuit, control instructions and configuration data, fault diagnosis information, and system synchronization and coordination information back to the transportation vehicle 001 and/or the charging device 002, and receive control instructions and configuration information from the transportation vehicle 001 and/or the charging device 002.

The third contact 2135-5 is electrically connected with the grounding authentication hardwire detection port of the control circuit. As described above, on the one hand, the third contact 2135-5 serves as an identity authentication contact to perform identity authentication between the battery 2000 and the transportation vehicle 001 and/or the charging device 002. Only the transportation vehicle 001 and/or the charging device 002 passing the authentication can be connected with the battery 2000 to perform data interaction with the battery 2000. On the other hand, the third contact 2135-5 can serve as a grounding monitoring contact for detecting whether the battery 2000 is grounded well to ensure electric safety.

The fourth contact 2135-7 is electrically connected with the charging wake-up port of the control circuit. In a scenario where the battery 2000 is connected with the transportation vehicle 001 and the battery 2000 is low, the transportation vehicle 001 will send a charging signal to the fourth contact 2135-7, and the fourth contact 2135-7 then transmits the charging signal to the control circuit, and the control circuit detects the charging signal and starts the charging program. In a scenario where the battery 2000 is connected with the transportation vehicle 001, the control circuit firstly outputs an output voltage of a preset voltage value through the fourth contact 2135-7, and after a preset duration, the control circuit reduces the output voltage to 0 through the fourth contact 2135-7, thus enabling active wake-up charging. When the battery 2000 is connected with the charging device 002, the control circuit detects that the state of the battery 2000 changes through the fourth contact 2135-7, and if DET of the battery 2000 is pulled down, the charging program is started. Those skilled in the art will understand that other charging wake-up scenarios also fall into the protection scope of this specification.

As described above, in addition to the first battery interface 213, the interface part 210 further includes a second battery interface to provide a different connection manner from the first battery interface 213 for the battery 2000. The second battery interface includes a second battery interface 215, a second interface surface 218, at least one side face 216, and a recessed space 219. The recessed space 219 is disposed on the second housing 211. The at least one side face 216 is at least one of four side faces intersecting an end face of the interface part 210 away from the power part 230. The recessed space 219 is constituted by any two intersecting side faces of the four side faces. The second interface surface 218 is located inside the recessed space 219. The second battery interface 215 is mounted on the second interface surface 218. As a second solution that can charge and discharge the battery 2000, the second battery interface 215 is adapted to the second peripheral interface 117. The second battery interface 215 is coupled and electrically connected with the second peripheral interface 117. The adaptation may be adaptation in shape and size.

In particular, the at least one side face 216 includes a first side face 2161 and a second side face 2163. The first side face 2161 and the second side face 2163 intersect and form the recessed space 219. The recessed space 219 includes the second interface surface 218. The recessed space 219 includes a first opening 2191 and a second opening 2193. The first opening 2191 is formed on the first side face 2161 and disposed opposite to the second interface surface 218, and the second opening 2193 is formed on the second side face 2163. When the second battery interface 215 is connected with the second peripheral interface 117, the second peripheral interface 117 enters the recessed space from the first opening 219 and is coupled with the second battery interface 215 on the second interface surface 218, and the second opening 2193 can allow a wire of the second peripheral interface 117 to enter the recessed space 219.

The recessed space 219 further includes a second protective wall 2195. The second protective wall 2195 extends from the first side face 2161 as a base surface to the second interface surface 218 and is disposed around the second interface surface 218. The second protective wall 2195 provides protection for the second battery interface 215 from a side face of the second interface surface 218.

The second battery interface 215 is different from the above-mentioned first battery interface 213 but has a same function, charging and discharging of the battery 2000 and communication transmission between the battery 2000 and a third-party device can be realized. The second battery interface 215 includes at least one communication contact array and at least one power contact array. The at least one communication contact array can realize communication of the battery 2000 with the transportation vehicle 001 and/or a third-party communication device. The at least one power contact array can realize electric energy output from the battery 2000 and electric energy input to the charging device 002. It needs to be noted that the at least one communication contact array may include one communication contact array, two communication contact arrays, three communication contact arrays, etc. The at least one power contact array may include one power contact array, two power contact arrays, three power contact arrays, etc. FIG. 6 is a structural schematic diagram of a second battery interface provided according to some embodiments of this specification. For ease of showing, the following description is made by taking as an example that the second battery interface 215 includes one power contact array and one communication contact array. In this case, the one communication contact array is disposed on one side of the power contact array. Those skilled in the art will understand that other numbers of power contact arrays and communication contact arrays also fall into the protection scope of this specification.

The at least one power contact array is electrically connected with the battery body 233. In particular, as described above, taking one power contact array as an example, the one power contact array includes one second negative contact 2151-1 and one second positive contact 2151-3. The one second negative contact 2151-1 is electrically connected with the negative power output electrode of the battery body 233, and the one second positive contact 2151-3 is electrically connected with the positive power output electrode.

The at least one communication contact array is electrically connected with the control circuit. In particular, as described above, taking one communication contact array as an example, the one communication contact array is distributed on one side of one power contact array. The one communication contact array includes four contacts. The four contacts can perform data transmission, safety protection, and charging wake-up, respectively. In particular, the four contacts include a fifth contact 2153-1, a sixth contact 2153-3, a seventh contact 2153-5, and an eighth contact 2153-7. The fifth contact 2153-1 is electrically connected with the CAN communication H port of the control circuit; the sixth contact 2153-3 is electrically connected with the CAN communication L port of the control circuit; the seventh contact 2153-5 is electrically connected with the grounding authentication hardwire detection port of the control circuit; and the eighth contact 2153-7 is electrically connected with the charging wake-up port of the control circuit. The fifth contact 2153-1, the sixth contact 2153-3, the seventh contact 2153-5, and the eighth contact 2153-7 have the same functions and connection relationships with the above-mentioned first contact 2135-1, the second contact 2135-3, the third contact 2135-5, and the fourth contact 2135-7, which will not be described redundantly here.

Moreover, the battery 2000 further includes a guide device 270. When the first battery interface 213 is coupled with the first peripheral interface 115, the guide device 270 can guide the first battery interface 213. The guide device 270 may be of a plurality of types. For example, in some embodiments, any one of the battery 2000 and the battery compartment 1000 includes a linear bearing, and the other one includes a guide rail. Rectilinear motion guiding is realized by means of coordination of the linear bearing and the guide rail. In some embodiments, any one of the battery 2000 and the battery compartment 1000 includes a guide pillar, and the other one includes a guide sleeve. The motion of the battery 2000 along a preset path is realized by means of coordination of the guide pillar and the guide sleeve. In some embodiments, any one of the battery 2000 and the battery compartment 1000 includes a dovetail groove, and the other one includes a T-shaped groove. The positioning and guiding of the battery 2000 in a transverse direction and a longitudinal direction and the like can be realized by means of coordination of the dovetail groove and the T-shaped groove. Those skilled in the art will understand that other types of guide devices 270 also fall into the protection scope of this specification.

The interface part 210 further includes a second battery interface cover 220. When the battery 2000 is switched off, the second battery interface cover 220 can cover the first opening 2191 and the second opening 2193, preventing moisture, dust, or other impurities from entering to affect the performance of the second battery interface 215. The second battery interface cover 220 is movably connected with the second interface surface 218 or the second protective wall 2195. The movable connection may be snap-fit connection, magnetic attraction connection, spring connection, hinged connection, etc. This specification does not impose a limitation on it.

The operation part 250 can facilitate lifting the battery 2000 by a user so as to complete mounting and removal. FIG 7 is a structural schematic diagram of an operation part 250 of a battery 2000 of a vehicle presented in this specification. As shown in FIG. 7, the operation part 250 includes a third housing 251, a handle 253, a switch button 255, and an indicator lamp 257. The third housing 251 is a mounting base for other parts of the operation part 250, and the other parts (such as the handle 253, the switch button 255, and the indicator lamp 257) are mounted with the third housing 251 as a benchmark. The third housing 251 can be molded integrally with the above-mentioned first housing 231, or the third housing 251 may be molded separately from and then assembled with the first housing 231. When the third housing 251 and the first housing 231 are molded separately and then assembled, the third housing 251 can be connected with the first housing 231. In particular, the third housing 251 can be fixedly connected or detachably connected with the first housing 231. The fixed connection and the detachable connection may be the same as described above in this specification, which will not be described redundantly here. The material of the third housing 251 may be stainless steel, aluminum, rigid plastics, etc. This specification does not impose limitations on the shape and the material of the third housing 251.

The handle 253, as a hand lifting portion of the battery 2000, can be convenient for the user to take and place the battery 2000, thereby completing the removal and mounting of the battery 2000. The handle 253 is mounted on the third housing 251 and mechanically connected with the third housing 251. The handle 253 can be mounted at any position of the third housing 251. For example, the handle 253 is mounted on the third housing 251 and located on an end face of an end away from the power part 230. For another example, the handle 253 can be mounted on any one of four side faces intersecting an end face of the operation part 250 away from the power part 230. The mechanical connection may be at least one of threaded connection, key connection, welded connection, riveting, pin connection, snap-fit connection, or adhesive bonding. The handle 253 can be of any shape. For example, the handle 253 is a C-shaped handle, an L-shaped handle, or a recessed handle. This specification does not impose limitations on the mounting position of the handle 253, the connection manner of the handle 253 and the third housing 251, and the shape of the handle 253.

The switch button 255 can be mounted on the third housing 251. In particular, the switch button 255 can be mounted at any position of the third housing 251. For example, the switch button 255 is mounted on the third housing 251 and located on the end face of the end away from the power part 230. For another example, the switch button 255 can be mounted on any one of four side faces intersecting an end face of the operation part 250 away from the power part 230. This specification does not impose a limitation on it. The switch button 255 can control the battery 2000 to be switched on and off. In particular, the switch button 255 is electrically connected with the switch control port of the control circuit, and the control circuit is electrically connected with the power part 230. When the switch button 255 is triggered, the circuit between the power part 230 and the interface part 210 is closed so that the current can flow from the power part 230 to other electric components. When the switch button 255 is in an off state, the circuit between the power part 230 and the interface part 210 is opened so that the current cannot flow from the power part 230 to other electric components.

The indicator lamp 257 can be mounted on the third housing 251. In particular, the indicator lamp 257 can be mounted at any position of the third housing 251. For example, the indicator lamp 257 is mounted on the third housing 251 and located on the end face of the end away from the power part 230. For another example, the indicator lamp 257 can be mounted on any one of four side faces intersecting an end face of the operation part 250 away from the power part 230. This specification does not impose a limitation on it. The indicator lamp 257 can be configured to display the state of the battery 2000. The state of the battery 2000 may be at least one of a battery power state, a battery operating state, a battery charging state, or a battery discharging state. Further, the indicator lamp 257 is electrically connected with the indicator lamp port of the control circuit; the control circuit is electrically connected with the power part 230; and the control circuit detects a state signal of a battery cell and drives the indicator lamp 257 to display it. The indicator lamp 257 can display the battery state in a plurality of ways. For example, different battery states are fed back using light of different intensities. For another example, different battery states are fed back using light changes of different colors. This specification does not impose a limitation on it.

It needs to be noted that the above-mentioned electrical connection can be implemented in a plurality of ways, such as wire connection, plug-and-socket connection, contact connection, and direct welding.

In conclusion, this specification presents the battery 2000 of a vehicle. The first battery interface 213 and the second battery interface 215 are disposed on the battery 2000. The first battery interface 213 is adapted to the first peripheral interface 115, and the second battery interface 215 is adapted to the second peripheral interface 117. When the battery 2000 is inserted into the transportation vehicle 001 and/or the charging device 002, the first battery interface 213 is coupled and electrically connected with the first peripheral interface 115, and the second battery interface 215 is coupled and electrically connected with the second peripheral interface 117. With the first battery interface 213 and the second battery interface 215, the battery 2000 can be adapted to the transportation vehicle 001 and/or the charging device 002 having the first peripheral interface 115, and can also be adapted to the transportation vehicle 001 and/or the charging device 002 having the second peripheral interface 117. The university of the battery 2000 is improved.

The interface part includes a first interface surface, a second interface surface, and at least one side face.

The power part includes a battery body ad is connected with the interface part; and the operation part is connected with the power part. The interface part includes:
a first battery interface adapted to a first peripheral interface, where the first interface is mounted on the first interface surface and electrically connected with the battery body; and
a second battery interface adapted to a second peripheral interface, where the second interface is mounted on the second interface surface and electrically connected with the battery body.

The vehicle and/or a charging device includes a battery compartment; a deep end of the battery compartment includes a bottom surface; the first peripheral interface is fixed on the bottom surface; and a position of the first interface on the first interface surface corresponds to a position of the first peripheral interface on the bottom surface such that the first battery interface is coupled and electrically connected with the first peripheral interface after the battery is inserted into the battery compartment.

According to some examples provided in this embodiment, the battery further includes a control circuit; the first battery interface and the second battery interface each include: at least one communication contact array electrically connected with the control circuit; and at least one power contact array electrically connected with positive and negative power output electrodes of the battery body.

According to some examples provided in this embodiment, each contact array in the at least one communication contact array includes: a first contact electrically connected with a CAN communication H port of the control circuit; a second contact electrically connected with a CAN communication L port of the control circuit; a third contact electrically connected with a grounding authentication hardwire detection port of the control circuit; and a fourth contact electrically connected with a charging wake-up port of the control circuit.

According to some examples provided in this embodiment, the control circuit is configured to: when the battery is connected with the vehicle, detect a charging signal or detect DET pull-down through the fourth contact; or when the battery is connected with the vehicle, output an output voltage of a preset voltage value through the fourth contact, and after a preset duration, reduce the output voltage to 0.

According to some examples provided in this embodiment, the first battery interface includes: one power contact array including two negative contacts and one positive contact, where the two negative contacts are electrically connected with the negative power output electrode of the battery body, and the positive contact is electrically connected with the positive power output electrode; and the positive contact is located between the two negative contacts; and two communication contact arrays respectively distributed on two sides of the power contact array.

According to some examples provided in this embodiment, the first battery interface includes a base which includes: a contact region, where each contact in the communication contact arrays and the power contact array is disposed on the contact region and is a protruding conductor having a first height; and a protective wall surrounding the contact region and having a second height greater than the first height to provide protection for the power contact array and the communication contact arrays from a side face and a front face of the contact region.

According to some examples provided in this embodiment, the battery further includes: a guide device configured to guide the first battery interface when the battery enters the battery compartment and the first battery interface is coupled with the first peripheral interface.

According to some examples provided in this embodiment, the second battery interface includes: one power contact array; and one communication contact array disposed on one side of the power contact array.

According to some examples provided in this embodiment, the battery further includes: a first side face and a second side face, where the first side face intersects the second side face; and a recessed space located at an intersection of the first side face and the second side face and including the second interface surface, and configured to accommodate the second peripheral interface.

According to some examples provided in this embodiment, the recessed space includes: a first opening formed on the first side face and opposite to the second interface surface such that the second peripheral interface enters the recessed space from the first opening and is coupled with the second battery interface; a second opening formed on the second side face for a wire of the second peripheral interface to enter the recessed space; and a protective wall for protecting the second battery interface.

According to some examples provided in this embodiment, the battery further includes a second battery interface cover in hinged connection with the second interface surface or the protective wall through a spring hinge structure and configured to cover the first opening and the second opening when closed.

According to some examples provided in this embodiment, the interface part is located at a first end of the power part; and the operation part is located at a second end of the power part and includes: a handle mechanically connected with the power part such that a user lifts the battery using a hand; a switch button electrically connected with the control circuit and configured to control the battery to be switched on and off; and an indicator lamp electrically connected with the control circuit and configured to display a state of the battery.

According to some examples provided in this embodiment, the state of the battery includes at least one of a battery power state, a battery operating state, a battery charging state, or a battery discharging state; and the handle is at least one of a C-shaped handle, an L-shaped handle, or a recessed handle.

According to some examples provided in this embodiment, the power part is of a cuboid structure; and the interface part, the power part, and the operation part are independent units and are assembled into the battery.

The foregoing describes the specific embodiments of this specification. The battery protected by these examples have two different joints which have the charging and discharging functions, and can use different connection manners to be adapted to different vehicle models. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed disclosure, those skilled in the art can understand that the foregoing detailed disclosure may be presented by way of example only, and may not be limited. Although there is no clear description, those skilled in the art can understand that this specification intends to cover various reasonable changes, improvements, and modifications of the embodiments. These changes, improvements, and modifications are intended to be proposed in this specification and are within the spirit and scope of the exemplary embodiments of this specification.

In addition, some specific terms in this specification have been used to describe the embodiments of the present disclosure. For example, "one embodiment", "an embodiment", and/or "some embodiments" mean that a specific feature, structure, or characteristic described in combination with the embodiment may be included in at least one embodiment of this specification. Therefore, it can be emphasized and should be understood that two or more references to "an embodiment" or "one embodiment" or "an alternative embodiment" in various parts of this specification do not necessarily all refer to the same embodiment. In addition, specific feature, structure, or characteristic may be appropriately combined in one or more embodiments of this specification.

It should be understood that in the foregoing description of the embodiments of this specification, to help understand a feature, and for the purpose of simplifying this specification, this specification sometimes combines various features in a single embodiment, a drawing, or description thereof. However, this does not mean that the combination of these features is necessary. It is entirely possible for those skilled in the art to mark some of the devices as a single embodiment for understanding when reading this application. In other words, the embodiments in this specification can also be understood as an integration of multiple sub-embodiments. The content of each sub-embodiment is also true when it is less than all the characteristics of a single previously disclosed embodiment.

Each patent, patent application, publication of patent applications, and other materials referenced in this application, such as articles, books, specifications, publications, documents, articles, etc., except for any historical litigation documents related thereto, any identical historical litigation documents that may be inconsistent or conflicting with this application, or any identical historical litigation documents that may have a restrictive effect on the widest scope of the claims may be incorporated herein by reference and used for all purposes now or in the future associated with this application. In addition, if the description, definition, and/or use of terms in any associated materials contained herein is inconsistent with or in conflict with that in this document, the terms in this document shall prevail.

Finally, it should be understood that the embodiment of the present disclosure provided herein is an explanation of the principle of the embodiment of the present disclosure. Other modified embodiments are also within the scope of this specification. Therefore, the embodiments disclosed in this specification are merely examples rather than limitations. Those skilled in the art can adopt alternative configurations according to the embodiments in this specification to implement the present disclosure in this specification. Therefore, the embodiments of this specification are not limited to those exactly described in the present disclosure.

## Claims

1. A battery of a vehicle, **characterized by** comprising:
an interface part, including a first interface surface and a second interface surface;
a power part, including a battery body and being connected with the interface part; and
an operation part, connected with the power part, wherein
the interface part includes:
a first battery interface, adapted to a first peripheral interface, wherein the first battery interface is mounted on the first interface surface and electrically connected with the battery body, and
a second battery interface, adapted to a second peripheral interface, wherein the second battery interface is mounted on the second interface surface and electrically connected with the battery body, wherein
wherein the vehicle includes a battery compartment, a deep end of the battery compartment includes a bottom surface, the first peripheral interface is fixed on the bottom surface, and a position of the first battery interface on the first interface surface corresponds to a position of the first peripheral interface on the bottom surface, such that the first battery interface is coupled and electrically connected with the first peripheral interface after the battery is inserted into the battery compartment.

2. The battery according to claim 1, **characterized by** further comprising a control circuit; wherein
the first battery interface and the second battery interface each includes:
at least one communication contact array, electrically connected with the control circuit; and
at least one power contact array, electrically connected with positive and negative power output electrodes of the battery body.

3. The battery according to claim 2, **characterized in that** each contact array in the at least one communication contact array includes:
a first contact, electrically connected with a Controller Area Network (CAN) communication H port of the control circuit;
a second contact, electrically connected with a CAN communication L port of the control circuit;
a third contact, electrically connected with a grounding authentication hardwire detection port of the control circuit; and
a fourth contact, electrically connected with a charging wake-up port of the control circuit.

4. The battery according to claim 3, **characterized in that** the control circuit is configured to:
when the battery is connected with the vehicle, detect a charging signal or detect Detection (DET) pull-down with the fourth contact; or
when the battery is connected with the vehicle, output an output voltage of a preset voltage value with the fourth contact, and after a preset duration, reduce the output voltage to 0.

5. The battery according to claim 2, **characterized in that** the first battery interface includes:
a power contact array, including two negative contacts and one positive contact, wherein the two negative contacts are electrically connected with the negative power output electrode of the battery body, the positive contact is electrically connected with the positive power output electrode, the positive contact is located between the two negative contacts; and
two communication contact arrays, respectively arranged on two sides of the power contact array.

6. The battery according to claim 5, **characterized in that** the first battery interface includes a base, and the base includes:
a contact region, wherein each contact in the communication contact arrays and the power contact array is disposed on the contact region and is a protruding conductor having a first height; and
a first protective wall, surrounding the contact region and having a second height greater than the first height, to provide protection for the power contact array and the communication contact arrays from a side face and a front face of the contact region.

7. The battery according to claim 6, further comprising:
a guide device, configured to guide the first battery interface when the battery enters the battery compartment and the first battery interface is coupled with the first peripheral interface.

8. The battery according to claim 2, **characterized in that** the second battery interface includes:
a power contact array; and
a communication contact array, disposed on a side of the power contact array.

9. The battery according to claim 8, **characterized in that** the interface part further includes:
at least one side face, including a first side face and a second side face, whereon the first side face intersects the second side face; and
a recessed space, which is located at an intersection of the first side face and the second side face and includes the second interface surface, and is configured to accommodate the second peripheral interface.

10. The battery according to claim 9, **characterized in that** the recessed space includes:
a first opening on the first side face and opposite to the second interface surface, to allow the second peripheral interface to enter the recessed space from the first opening and be coupled with the second battery interface;
a second opening on the second side face to allow a wire of the second peripheral interface to enter the recessed space; and
a second protective wall to protect the second battery interface.

11. The battery according to claim 10, **characterized in that** the interface part further includes a second battery interface cover, which is movably connected with the second interface surface or the second protective wall and configured to cover the first opening and the second opening when closed.

12. The battery according to claim 2, **characterized in that** the interface part is located at a first end of the power part; and
the operation part is located at a second end of the power part, and includes:
a handle, mechanically connected with the power part to allow a user to lift the battery by hand,
a switch button, electrically connected with the control circuit, and configured to control the battery to be switched on and off, and
an indicator lamp, electrically connected with the control circuit, and configured to display a state of the battery.

13. The battery according to claim 12, **characterized in that** the state of the battery includes: at least one of a battery power state, a battery operating state, a battery charging state, or a battery discharging state; and
the handle is at least one of a C-shaped handle, an L-shaped handle, or a recessed handle.

14. The battery according to claim 1, **characterized in that** the power part is of a cuboid structure; and
the interface part, the power part, and the operation part are independent units and are assembled into the battery.
